# EUROPEAN PATENT SPECIFICATION

(11) **EP 3 975 153 B1**
(45) Date of publication and mention of the grant of the patent: **18.11.2026**
(21) Application number: 21199192.2
(22) Date of filing: 27.09.2021
(51) Int. Cl.: G08G 1/0967

(54) **VEHICLE-LAUNCHING WARNING DEVICE, SYSTEM AND METHOD**
FAHRZEUGSTARTWARNVORRICHTUNG, -SYSTEM UND -VERFAHREN
DISPOSITIF, SYSTÈME ET PROCÉDÉ D'AVERTISSEMENT DE LANCEMENT DE VÉHICULE

(30) Priority: 28.09.2020 CN 202011041761
(43) Date of publication of application: 30.03.2022
(73) Proprietor: Volvo Car Corporation, 40531 Göteborg (SE)
(72) Inventor: WANG, Wei, Shanghai, 201815 (CN)
(74) Representative: Kransell & Wennborg KB

(56) References cited:
- US-A1- 2015 232 026
- US-A1- 2017 217 421
- US-A1- 2018 194 282

## Description

### TECHNICAL FIELD

The present disclosure relates to the technical field of vehicle driving assistance, in particular to a vehicle-starting warning device, a vehicle-starting warning system and a vehicle-starting warning method, and also relates to a corresponding non-transitory computer readable medium.

### BACKGROUND

With the rapid development of the automobile industry, driving assistance functions are increasingly used in vehicles in order to improve the safety and comfort of the vehicles. Among the functions available, the warning function associated with vehicle launching is quite useful, which can help a driver launch the vehicle in time in the case of a traffic jam or waiting for the change of a traffic light signal state, so as to avoid missing the current green phase of a traffic light signal or lead to a traffic jam.

In a conventional warning function, e.g., in US 2017/0217421 A1, it is determined whether a stopped vehicle should begin moving into a given region (e.g., a region of a road) based on information from one or more sensors outfitted on the vehicle. If it is determined the stopped vehicle should begin moving into the given region, the vehicle can give the driver an audible, visual, tactile, etc., indication of such a determination. However, according to the conventional warning function, the vehicle is usually configured to automatically trigger a warning to a driver once it detects the vehicle in front starts to move. However, such a conventional solution includes several challenges. For example, a driver receives a vehicle-starting warning when he or she is starting a vehicle, which causes excessive disturbance to the driver. In addition, in a condition that the vehicle does not need to start immediately after the vehicle in front starts to move, sending warning to the driver also causes excessive disturbance to the driver.

### SUMMARY

In view of the above problems in the prior art, the present disclosure provides a vehicle starting warning device according to independent claim 1, a vehicle-starting method according to independent claim 14, and a non-transitory computer readable medium according to independent claim 15. Further details are included in the dependent claims.

### BRIEF DESCRIPTION OF THE DRAWINGS

The disclosed aspects will hereinafter be described in connection with the appended drawings that are provided to illustrate and not to limit the scope of the present disclosure.
Figure 1 is an exemplary environment in which some embodiments of the present disclosure may be implemented.
Figure 2 is a schematic block diagram of a vehicle-starting warning system according to an embodiment of the present disclosure.
Figure 3 schematically shows a vehicle-starting warning process according to an embodiment of the present disclosure.
Figure 4 is a flowchart of a vehicle-starting warning method according to an embodiment of the present disclosure.

### DETAILED DESCRIPTION

A driver does not always concentrate on a traffic light while waiting for a target traffic light to turn green, especially at an intersection with a long red-light duration, and he or she may fail to start a vehicle (i.e., a host vehicle) in time after the traffic light turns from red to green, resulting in road congestion and reduced traffic efficiency. Moreover, this may cause a series of problems such as road rage, whistling, congestion and increased exhaust emissions. In view of the above problems, the present disclosure provides a vehicle-starting warning solution for warning vehicle starting which determines whether to send a vehicle-starting warning to a driver based on states of a target traffic light and driver's degree of attentiveness.

The present disclosure also provides a control logic that can determine situations in which it is unnecessary to trigger a vehicle-starting warning (e.g., the situation in which a vehicle is impossible to pass through the target traffic light during the next green-light signal) so as to avoid excessive interruption to the driver and also avoid misleading to the driver (e.g., the warning is triggered un-appropriately and the driver starts the vehicle without thinking upon receiving a vehicle-starting warning).

The present disclosure also provides a control logic that can determine a timing at which the vehicle-starting warning is sent out and a triggering mode (e.g., a triggering degree and frequency of the vehicle-starting warning) with which the vehicle-starting warning is provided based on driver's state (e.g., driver's degree of attentiveness) so as to improve the accuracy of the triggering time and triggering frequency and also improve the flexibility of triggering the vehicle-starting warning. In this way, the user-friendliness of the vehicle is improved. Some possible embodiments of the present disclosure will be described now.

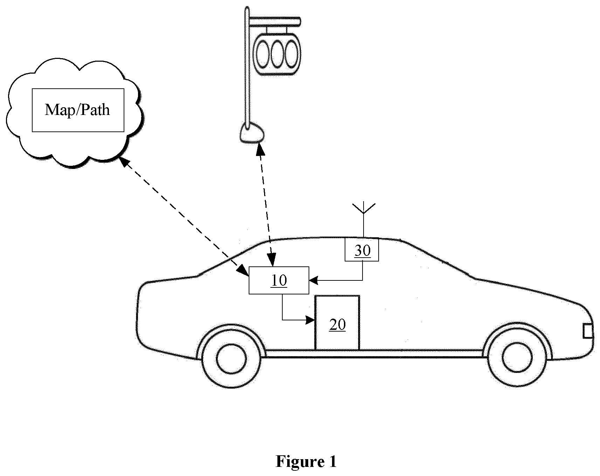

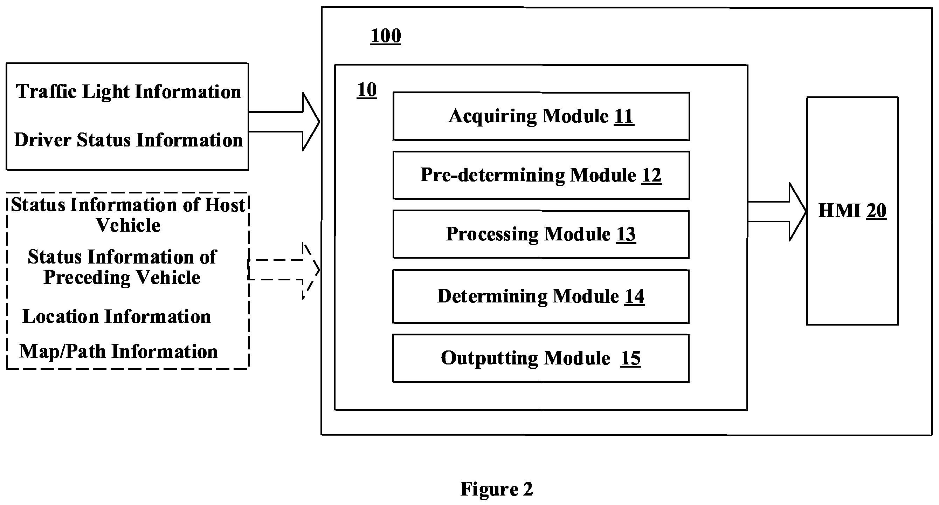

Figure 1 shows an exemplary environment in which some embodiments of the present disclosure may be implemented. Figure 2 schematically shows a vehicle-starting warning system 100 for warning vehicle starting according to an embodiment of the present disclosure. The vehicle-starting warning system 100 for warning vehicle starting is disposed on or in a vehicle. The warning system for warning vehicle starting mainly includes a vehicle-starting warning device 10 and a HMI 20.

The vehicle-starting warning device 10 may obtain traffic light information and driver status information, analyze the obtained information, and determine whether to trigger a vehicle-starting warning in the vehicle according to a remaining time of a current red signal and driver's degree of attentiveness. If it is determined a vehicle-starting warning needs to be triggered, a warning command is generated and output.

The traffic light information may include a plurality of types of information, such as a current light color and a remaining time of the current light phase, optionally, the traffic light information further includes time periods of other light phases.

The vehicle-starting warning device 10 may obtain the traffic light information from an intelligent traffic light. For example, the intelligent traffic light transmits information including its own status to a vehicle via a wireless communication (e.g., 5G, C-V2X or DSRC) in real time. In other words, the vehicle obtains traffic light information by means of interconnections between the vehicle and the intelligent traffic light serving as a roadside device. The traffic light information may be captured by in-vehicle sensors (e.g., a camera, radar and lidar). The vehicle-starting warning device 10 processes and analyzes the captured information to obtain the status of the traffic light.

The driver status information may include a plurality of types of information. For example, the driver status information includes one or more of the following: a gaze direction, a head direction, a blinking frequency, a size and an orientation of a pupil and facial expressions of the driver.

The vehicle-starting warning device 10 may acquire an image including the driver's status information from an in-vehicle camera, analyze and process the acquired image to obtain the driver's status. The warning device 10 may also obtain the driver's status information from a vehicle driver monitoring system (DMS).

Additionally, the vehicle-starting warning device 10 may also obtain state parameters of the vehicle through an in-vehicle bus system, obtain surrounding environment conditions, vehicle parameters of surrounding vehicles, map data and navigation path from a cloud sever or a roadside device through a wireless communication interface of the vehicle, and use some or all of the information to assist analysis and judgment.

For example, the vehicle-starting warning device 10 may obtain status information of the vehicle (e.g., a vehicle speed), status information of preceding vehicles (e.g., vehicle types of preceding vehicles, a size of each vehicle type, a starting time of each of the preceding vehicles and a number of each vehicle type), map information (e.g., map data for lane-level digital maps), and navigation information (e.g., a navigation path of the vehicle), and use some or all of the information to calculate parameters to be used in subsequent analyses and proceedings. For example, the parameters may include a travelling lane of the vehicle, a target travelling direction of the vehicle and a target traffic light (the target traffic light is a next traffic light in a travelling direction of the vehicle after passing through a current traffic light), a queuing distance between the vehicle and a stop line and a total starting time of all of the preceding vehicles (i.e., a delay time for the vehicle to start).

In a further embodiment, if the warning device 10 determines the vehicle-starting warning does not need to be triggered according to the acquired information or information calculated based on the acquired information, the warning device 10 ends this process.

In a further embodiment, the vehicle-starting warning device 10 may determine a triggering timing and/or a triggering mode of the warning according to the acquired information or the information calculated based on the acquired information, and driver's degree of attentiveness. Then, the vehicle-starting warning device 10 may generate a warning command and output the warning command to a HMI of the vehicle.

The HMI 20 is configured to provide the vehicle-starting warning in the vehicle upon receiving the warning command according to a triggering timing and/or a triggering mode included in the warning command. The vehicle-starting warning may include one or more forms of visual, audio, voice, and vibration. The HMI 20 may be implemented in a steering wheel, a driver's seat, a head-up display, a central control display screen or a voice broadcaster which is integrated with corresponding warning functions.

Additionally, the vehicle-starting warning system 100 for warning vehicle starting may also include a positioning device 30 for determining a position of the vehicle. The positioning device 30 may be implemented as a vehicle GPS, which determines a position the vehicle based on received satellite signals. The positioning device 30 may also be a device that realizes positioning based on other technologies, for example, a locator based on computer vision technology, radio frequency identification positioning technology, ultra-wideband positioning technology, or base station positioning technology. Embodiments of the vehicle-starting warning device 10 are described below.

In an embodiment, the vehicle-starting warning device 10 includes an acquiring module 11, a pre-determining module 12, a processing module 13, a determining module 14 and an outputting module 15. The vehicle-starting warning device 10 and its modules may be implemented by means of hardware or software or a combination of hardware and software, including a non-transitory computer readable medium stored in a memory and implemented as instructions executed by a processor. Regarding the part implemented by means of hardware, it may be implemented in application-specific integrated circuit (ASIC), digital signal processor (DSP), data signal processing device (DSPD), programmable logic device (PLD), field programmable gate array (FPGA), processor, controller, microcontroller, microprocessor, electronic unit, or a combination thereof. The part implemented by software may include microcode, program code or code segments. The software may be stored in a machine readable storage medium, such as a memory.

It is noted that the vehicle-starting warning device 10 and its modules are named functionally (logically) and their physical positions are not limited by the functional names. In other words, the modules may be included in the same chip or circuit. The modules may also be provided in different chips or circuits.

In an embodiment, the vehicle-starting warning device 10 may be implemented to include a memory and a processor. The memory contains instructions that, when executed by the processor, cause the processor to execute the vehicle-starting warning strategy/method according to embodiments of the present disclosure.

In an embodiment, the vehicle-starting warning device 10 is implemented by software disposed in a domain controller or an electronic control unit (ECU) of the vehicle.

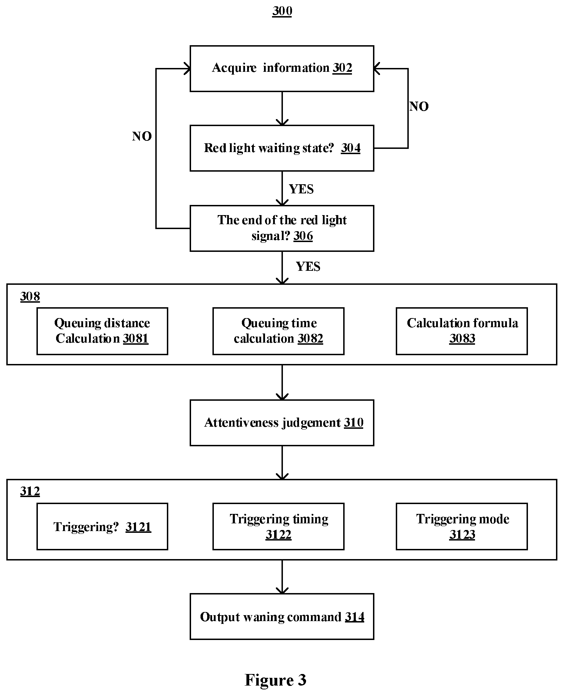

Figure 3 illustrates a vehicle-starting warning process according to a feasible embodiment of the present disclosure. The process may be executed in the vehicle-starting warning device 10. Hereinafter, the working principle of the vehicle-starting warning device 10 is introduced in combination with Figure 3.

In block 302, the acquiring module11 acquires traffic light information, driver status information and some or all of the following: information on location, status and navigation of the vehicle, and map information and navigation information of a preceding vehicle, and environmental information. The order and timing of acquiring the information are not limited in the present disclosure. The information may be acquired in real time, acquired at a predetermined frequency, or acquired before calculation and processing.

In block 304, the pre-determining module 12 determines whether the vehicle is in a red light waiting state based on the acquired information or information calculated according to the acquired information. If it is determined that the vehicle is in the red light waiting state, the subsequent processing operations of the device 10 are activated, that is, a warning function for warning the starting of the vehicle is activated. If it is determined that the vehicle is not in the red light waiting state, the subsequent processing operations of the device 10 are not activated, that is, the warning function of the vehicle is not activated.

In an example, the pre-determining module 12 may determine a lane of the vehicle (i.e., a lane where the vehicle is located) based on (1) a position of the vehicle and map data; or (2) a navigation path (e.g., a navigation path is included in the navigation information). The pre-determining module 12 may determine a target travelling direction of the vehicle based on (1) the navigation path; or (2) the position of the vehicle, the map data and visual recognition and judgment functions of an in-vehicle camera, and determine the target traffic light (for example, if the vehicle is about to turn left, the left turn traffic light is determined as the target traffic light). Then, if the following conditions are met, the pre-determining module 12 determines that the vehicle is in the red light waiting state: (1) the target traffic light is in a red light phase; (2) the vehicle has a current speed of zero with a duration over a predetermined time period (for example, the vehicle has a current speed of zero with a duration over 5 seconds).

In the case that it is determined in the red light waiting state, the procedure proceeds to block 306. In block 306, the processing module 13 determines whether the target traffic light is at the end of a red light signal. "The end of a red light signal" can be understood as a remaining time of the red light signal being less than a predetermined time threshold. For example, the target traffic light signal is in a red light phase and will change to green in 10 seconds (e.g., the predetermined time threshold is 10 seconds).

In an embodiment, the acquiring module 11 acquires the traffic light information from an intelligent traffic light and the processing module 13 determines a remaining time of a current light phase based on the acquired information. In another embodiment, the acquiring module 11 acquires a series of pictures from an in-vehicle camera and the processing module 13 recognizes and analyzes the acquired pictures to obtain a remaining time of a current light phase. In yet another embodiment, the acquiring module 11 acquires traffic light information from a cloud server and the processing module 13 determines a remaining time of a current light phase based on the acquired information.

It is noted that the vehicle may obtain a remaining time of a current light phase regardless of whether display information of a current traffic light includes the remaining time, because the vehicle can obtain information including the remaining time through the interconnection between the vehicle and a cloud sever and/or a roadside device.

In block 308, after determining the target traffic light is at the end of the red light signal, the processing module 13 performs calculation and judgment to determine whether it is necessary to trigger the vehicle-starting warning so as to exclude situations without the need to trigger the vehicle-starting warning, thereby avoiding excessive interruption to the driver.

In block 3081, the processing module 13 calculates a queuing distance L_queue (i.e., a distance of the vehicle from a stop line) of the vehicle in the case that the vehicle is not a lead vehicle. The processing module 13 may calculate a distance between the current position of the vehicle and the stop line to obtain the queuing distance L_queue. If the queuing distance L_queue is less than a distance threshold, the processing module 13 will continue to perform subsequent processing operations of the device 10. If the queuing distance L_queue is greater than or equal to the distance threshold, the processing module 13 will end subsequent processing operations of the device 10. The distance threshold may be determined based on the following parameter, i.e., a distance obtained by multiplying a starting speed of the vehicle by a sum of a remaining time of a current red light phase and a time period of a subsequent green light phase. Of course, the distance threshold may include some margins based on the above parameter according to actual situations. It is seen that the judgment of the queuing distance provides advantages. The vehicle-starting warning may not be sent to the driver in the case where the vehicle is estimated to be far away from the stop line so that the vehicle cannot pass through the stop line during the subsequent green light phase. In this way, the driver of the vehicle does not need to pay attention to the starting time urgently without affecting the passage of the rear and surrounding vehicles.

In block 3082, the processing module 13 calculates a queuing time T_queue (i.e., a delayed starting time of the vehicle) that the vehicle needs to wait due to the starting of proceeding vehicles. The queuing time T_queue can be obtained by calculating a total starting time of the proceeding vehicles. If the queuing time T_queue is less than a time threshold, the processing module 13 will continue to perform subsequent processing operations of the device 10. If the queuing time T_queue is greater than or equal to the time threshold, the processing module 13 will end subsequent processing operations of the device 10. The time threshold may be predetermined based on a sum of a remaining time of a current red light phase and a time period of a subsequent green light phase. It is seen that the judgment of the queuing time provides advantages. The vehicle-starting warning may not be sent to the driver in the case where the delayed starting time of the vehicle is so long that the vehicle cannot pass through the stop line during the subsequent green light phase. In this way, the driver of the vehicle does not need to pay attention to the starting time urgently without affecting the passage of the rear and surrounding vehicles.

Example of calculating the queuing time T_queue of the vehicle will be described.

In an example, the acquiring module 11 obtains vehicle parameters of proceeding vehicles from a cloud server. The vehicle parameters of proceeding vehicles may include vehicle types, a number of each of the vehicle types, and a delayed starting time of each of the proceeding vehicles. The processing module 13 may calculate a delayed starting time of each of the proceeding vehicles and then sums these delayed starting times to obtain a total delayed starting time (i.e., a delayed starting time of the vehicle). For example, among the proceeding vehicles, there are five cars each of which has a type A and a starting time t(A); two trucks each of which has a type B and a starting time t(B) and one bus having a type C and a starting time t(C). In this case, the total delayed starting time of the proceeding vehicles (i.e., a delayed starting time of the vehicle) will be calculated by the formula: T_queue=t(A)*5+t(B)*2+t(C)*1.

In another example, an average length L_car of the proceeding vehicles may be estimated at a cloud server. The average length L_car may be obtained by calculating a sum of an average vehicle length and an average spacing distance of the proceeding vehicles. Next, the queuing distance L_queue is divided by the average length L_car to obtain a number N of the proceeding vehicles. Next, an average starting time T_car is multiplied by the number N to obtain the queuing time T_queue.

In block 3083, the processing module 13 calculates the queuing time T_queue of the vehicle according to the following formula and determines whether to trigger the vehicle-starting warning: $T_queue = ΣΑ \left(i\right) * t \left(i\right) * L / ΣΑ \left(i\right) * l \left(i\right) + L / S ,$ where "i" is representative of a vehicle type of a preceding vehicle), "A(i)" is a ratio of the number of i-type vehicles to a total number of preceding vehicles, "t(i)" is a starting time of the i-type vehicle, "l(i)" is a length of the i-type vehicle, "L" is a distance of the vehicle from the stop line, and "S" is a speed limit of a current lane.

If the queuing time T_queue is less than a time threshold, the processing module 13 will continue to perform subsequent processing operations of the device 10. If the queuing time T_queue is greater than or equal to the time threshold, the processing module 13 will end subsequent processing operations of the device 10.

The time threshold may be determined based on a sum of a remaining time of a current red light phase and a time period of a subsequent green light phase.

It will be noted that one or more of the blocks 3081, 3082, and 3083 may be selectively executed. If two or more blocks are executed, the execution order is not limited in the present disclosure.

In block 310, the processing module 13 determines driver's degree of attentiveness and determines whether the driver's degree of attentiveness is high enough for driving.

In an embodiment, the processing module 13 calculates an attention level that characterizes a level of the driver's degree of attentiveness. If the calculated attention level is greater than a level threshold, it is determined the driver's degree of attentiveness is high enough for driving. If the calculated attention level is smaller than or equal to a level threshold, it is determined the driver's degree of attentiveness is not high enough for driving. For example, the processing module 13 may use parameters (e.g., gaze direction, head direction, blinking frequency, size and orientation of pupils and facial expressions of the driver) included in the driver status information as a model input of a machine learning model and the attention level will be output from the model.

In another example, the processing module 13 determines whether the driver's degree of attentiveness is high enough for driving by the steps of: determining the driver's degree of attentiveness is not high enough for driving if a remaining time of a current red light phase is zero and a time period during which the driver is not concentrating exceeds an inattentive period threshold (for example, the inattentive period threshold is six seconds), and determining that the driver's degree of attentiveness is high enough for driving if the remaining time of the current red light phase is zero and the time period during which the driver is not concentrating does not exceed the inattentive period threshold. In this way, there is no need to send the vehicle-starting warning to the driver if the driver's attention is only momentarily or slightly distracted, so as not to cause excessive disturbance.

In block 312, the determining module 14 determines whether to trigger the vehicle-starting warning, when to trigger the vehicle-starting warning, and how to trigger the vehicle-starting warning, and generates a warning command if it is determined to rigger the vehicle-starting warning. The warning command includes a triggering timing and/or a triggering mode of the vehicle-starting warning.

In block 3121, if the conditions of (1) the target traffic light being at the end of a red light signal; and (2) the driver's degree of attentiveness being not high enough for driving are met, the determining module 14 determines to trigger the vehicle-starting warning and generates a warning command.

In block 3122, the determining module 14 determines a triggering timing of the vehicle-starting warning based on the driver's degree of attentiveness, so that the vehicle-starting warning is trigger earlier as the driver's degree of attentiveness lowers. For example, if the driver is seriously inattentive, the vehicle-starting warning is triggered 20 seconds before the starting of the vehicle; if the driver's attention is moderately inattentive, the vehicle-starting warning is triggered 10 seconds before the starting of the vehicle. In an example, the driver's degree of attentiveness can be divided into several levels, so as to determine an appropriate triggering timing before the starting of the vehicle.

It is noted that, regarding calculation of a starting time of the vehicle, situations of the vehicle being a lead vehicle and the vehicle being not a lead vehicle are considered. In the case of the vehicle being not a lead vehicle, a queuing time of the vehicle due to starting of a preceding vehicle is considered.

In block 3123, the determining module 14 determines a triggering mode with which the vehicle-starting warning is triggered according to the driver's degree of attentiveness, so that a triggering degree of the vehicle-starting warning is enhanced and/or a triggering frequency of the vehicle-starting warning is increased as the driver's degree of attentiveness lowers. For example, if the driver is seriously inattentive, the HMI may provide visual, voice and vibration warning to the driver, and may use strong voice, strong vibration, and repeated warnings. If the driver's attention is moderately distracted, the HMI may provide visual and voice warning, and may use medium volume and medium vibration intensity. In an embodiment, the driver's degree of attentiveness can be divided into several levels, so as to determine an appropriate triggering mode.

In block 314, the outputting module 15 outputs a warning command to the HMI 20, so that the HMI 20 provides the vehicle-starting warning in the vehicle according to the warning command.

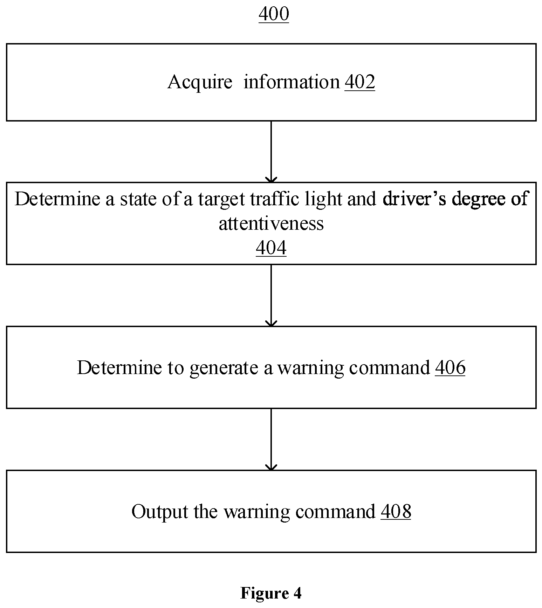

Figure 4 shows a vehicle-starting warning method 400 according to a feasible embodiment of the present disclosure. The method can be performed by means of a vehicle-starting warning device 10 as described above and/or a vehicle-starting warning system 100 as described above. For this reason, various features, which are described above with reference to the device and the system, are also applicable in the method.

Referring to Figure 4, in step 402, traffic light information and driver status information are acquired, and some or all of the following are acquired: information on location, status and navigation of a vehicle, map information, status information of a preceding vehicle, and environmental information.

In step 404, the acquired information is processed to determine whether a target traffic light is at the end of a red light signal and to determine whether the driver's degree of attentiveness is high enough for driving. The target traffic light is a next traffic light in a travelling direction of the vehicle after passing through a current traffic light.

In step 406, a warning command is generated if it is determined the target traffic light is at the end of a red light signal and the driver's degree of attentiveness is not high enough for driving.

In step 408, the warning command is output to a human machine interface (HMI) of the vehicle to trigger a vehicle-starting warning in the vehicle.

An embodiment of the present disclosure may provide a machine or computer readable medium in which software is stored, the software being optionally able to be executed by a vehicle-starting warning device as described above, and the software, when executed, being able to perform a vehicle-starting warning method as described above.

It should be appreciated that all the operations in the method described above are merely exemplary, and the present disclosure is not limited to any operations in the method or sequence orders of these operations, and should cover all other equivalents under the same or similar concepts.

The processors can be implemented using electronic hardware, computer software, or any combination thereof. Whether these processors are implemented as hardware or software will depend on the specific application and the overall design constraints imposed on the system. By way of example, a processor, any portion of a processor, or any combination of processors presented in this disclosure may be implemented as a microprocessor, a micro-controller, a digital signal processor (DSP), a field programmable gate array (FPGA), a programmable logic device (PLD), state machine, gate logic, discrete hardware circuitry, and other suitable processing components configured to perform the various functions described in this disclosure. The functions of a processor, any portion of a processor, or any combination of processors presented in this disclosure may be implemented as software executed by a microprocessor, a micro-controller, a DSP, or other suitable platforms.

The previous description is provided to enable any person skilled in the art to practice the various aspects described herein. Various modifications to these aspects will be readily apparent to those skilled in the art, and the generic principles defined herein may be applied to other aspects, insofar as falling within the scope of the appended claims.

## Claims

1. A vehicle-starting warning device (10) comprising:
an acquiring module (11) configured to acquire traffic light information and driver status information and to acquire some or all of the following: information on location, status and navigation of a vehicle, map information, status information of a preceding vehicle, and environmental information;
a processing module (13) configured to process the acquired traffic light information to determine whether a target traffic light is at the end of a red light signal and the acquired driver status information to determine whether the driver's degree of attentiveness is high enough for driving, the target traffic light being a next traffic light in a travelling direction of the vehicle after passing through a current traffic light, the end of a red light signal being when a remaining time of the red light signal that is less than a predetermined time threshold;
a determining module (14) configured to determine whether to generate a warning command based on the acquired traffic light information, the driver status information and some or all of the: information on location, status and navigation of the vehicle, map information, status information of the preceding vehicle, and environmental information, wherein the determining comprises determining to generate a warning command if the following condition is satisfied: the target traffic light is at the end of a red light signal and the driver's degree of attentiveness is not high enough for driving; and
an outputting module (15) configured to output the warning command to a human machine interface HMI of the vehicle to trigger a vehicle-starting warning in the vehicle.

2. The vehicle-starting warning device (10) of claim 1, the determining module being further configured to determine a triggering timing at which the vehicle-starting warning is triggered based on the driver's degree of attentiveness such that the vehicle-starting warning is triggered earlier by the HMI as the driver's degree of attentiveness lowers.

3. The vehicle-starting warning device (10) of claim 1 or 2, the determining module being further configured to determine a triggering mode with which the vehicle-starting warning is triggered based on the driver's degree of attentiveness such that a triggering degree of the vehicle-starting warning is enhanced and/or a triggering frequency of the vehicle-starting warning is increased as the driver's degree of attentiveness lowers.

4. The vehicle-starting warning device (10) of any one of claims 1 to 3, the warning device further comprising a pre-determining module (12);
the pre-determining module (10) being configured to determine whether the vehicle is in a red light waiting state based on the acquired information, to activate the subsequent determining and processing operations of the vehicle-starting warning device if the vehicle is determined to be in the red light waiting state, and not to activate a subsequent processing of the vehicle-starting warning device if the vehicle is determined not to be in the red light waiting state; and
the pre-determining module being configured to determine the vehicle is in the red light waiting state if the following conditions are met: (1) the target traffic light signal is in a red light phase; and (2) the vehicle has a current speed of zero with a duration over a predetermined time period.

5. The vehicle-starting warning device of any one of claims 1 to 4, the processing module being further configured to calculate a distance of the vehicle from a stop line before determining whether the driver's degree of attentiveness is high enough for driving in case of the vehicle being not a lead vehicle, to continue to determine the driver's degree of attentiveness if the distance is less than a distance threshold; and to end subsequent processing operations of the vehicle-starting warning device if the distance is greater than or equal to the distance threshold.

6. The vehicle-starting warning device of any one of claims 1 to 5, the processing module being further configured to calculate a waiting time of the vehicle due to starting of the preceding vehicle before determining whether the driver's degree of attentiveness is high enough for driving, to continue to determine the driver's degree of attentiveness if the waiting time is less than a time threshold, and to end the subsequent processing operations of the vehicle-starting warning device if the waiting time is greater than or equal to the time threshold, and
the time threshold being determined based on a sum of a remaining time of the current red light phase and a time period of a subsequent green light phase.

7. The vehicle-starting warning device (10) of any one of claims 1 to 6, the processing module being configured to calculate a queuing time T_queue of the vehicle due to starting of the preceding vehicle before determining whether the driver's degree of attentiveness is high enough for driving based on the following formula:$T_queue = ΣΑ \left(i\right) * t \left(i\right) * L / ΣΑ \left(i\right) * l \left(i\right) + L / S ,$
where "i" is representative of a vehicle type of the preceding vehicle, "A(i)" is a ratio of the number of i-type vehicles to a total number of preceding vehicles, "t(i)" is a starting time of the i-type vehicle, "l(i)" is a length of the i-type vehicle, "L" is a distance of the vehicle from a stop line, and "S" is a speed limit of a current lane,
the processing module being configured to continue to determine the driver's degree of attentiveness if the queuing time T_queue is less than a time threshold, and to end the subsequent processing operations of the vehicle-starting warning device if the queuing time is greater than or equal to the time threshold, and
the time threshold being determined based on a sum of a remaining time of the current red light phase and a time period of a subsequent green light phase.

8. The vehicle-starting warning device (10) of any one of claims 1 to 7, the processing module being configured to calculate an attention level of the driver's degree of attentiveness based on the driver status information, and to determine whether the driver's degree of attentiveness is high enough for driving based on the attention level, and
the processing module being configured to input the driver status information to a machine learning model stored in the processing module and the attention level is output from the machine learning model.

9. The vehicle-starting warning device (10) of any one of claims 1 to 8, the processing module being configured to determine the driver's degree of attentiveness is not high enough for driving if a remaining time of the current red light phase is zero and a duration during which the driver is not concentrating exceeds an inattentive period threshold.

10. The vehicle-starting warning device (10) of claim 4, the acquiring module being further configured to acquire navigation information, location information, map information and environmental information, and the pre-determining module being further configured to determine a target travelling direction of the vehicle after passing through the current traffic light based on (1) navigation information and/or (2) location information, map information and environmental information, and to determine the target traffic light based on the target travelling direction and the traffic light information.

11. The vehicle-starting warning device (10) of any one of claims 1 to 10, the traffic light information including a current light color and a remaining time of the current light phase and the traffic light information further includes time periods of other light phases.

12. The vehicle-starting warning device (10) of any one of claims 1 to 11, the driver status information including one or more of the following: a gaze direction, a head direction, a blinking frequency, a size and an orientation of a pupil and facial expressions of the driver.

13. A vehicle, comprising:
a vehicle-starting warning device (10) according to any one of the preceding claims 1 to 12, and
a human machine interface HMI (20) in communication with the vehicle-starting warning device (10); wherein the HMI (20) is configured to provide a vehicle-starting warning for warning vehicle starting in the vehicle based on the warning command.

14. A vehicle-starting warning method, comprising:
acquiring traffic light information and driver status information and to acquire some or all of the following: information on location, status and navigation of a vehicle, map information, status information of a preceding vehicle, and environmental information;
processing the acquired traffic light information to determine whether a target traffic light is at the end of a red light signal and the acquired driver status information to determine whether the driver's degree of attentiveness is high enough for driving, the target traffic light being a next traffic light in a travelling direction of the vehicle after passing through a current traffic light, the end of a red light signal being when a remaining time of the red light signal that is less than a predetermined time threshold;
determining whether to generate a warning command based on the acquired traffic light information, the driver status information and some or all of the: information on location, status and navigation of the vehicle, map information, status information of the preceding vehicle, and environmental information, wherein the determining comprises determining to generate a warning command if the following condition is satisfied: the target traffic light is at the end of a red light signal and the driver's degree of attentiveness is not high enough for driving; and
outputting the warning command to a human machine interface HMI of the vehicle to trigger a vehicle-starting warning in the vehicle.

15. A non-transitory computer readable medium comprising vehicle-starting warning instructions stored in a memory and executed by a processor to carry out the steps, comprising:
acquiring traffic light information and driver status information and to acquire some or all of the following: information on location, status and navigation of a vehicle, map information, status information of a preceding vehicle, and environmental information;
processing the acquired traffic light information to determine whether a target traffic light is at the end of a red light signal and the acquired driver status information to determine whether the driver's degree of attentiveness is high enough for driving, the target traffic light being a next traffic light in a travelling direction of the vehicle after passing through a current traffic light, the end of a red light signal being when a remaining time of the red light signal that is less than a predetermined time threshold;
determining whether to generate a warning command based on the acquired traffic light information, the driver status information and some or all of the: information on location, status and navigation of the vehicle, map information, status information of the preceding vehicle, and environmental information, wherein the determining comprises determining to generate a warning command if the following condition is satisfied: the target traffic light is at the end of a red light signal and the driver's degree of attentiveness is not high enough for driving; and
outputting the warning command to a human machine interface HMI of the vehicle to trigger a vehicle-starting warning in the vehicle.

## Patentansprüche

1. Fahrzeugstart-Warnvorrichtung (10), umfassend:
ein Erfassungsmodul (11), das dazu ausgelegt ist, Ampelinformationen und Fahrerstatusinformationen zu erfassen sowie einige oder alle der Folgenden zu erfassen: Informationen zu Standort, Status und Navigation eines Fahrzeugs, Karteninformationen, Statusinformationen eines vorausfahrenden Fahrzeugs und Umgebungsinformationen;
ein Verarbeitungsmodul (13), das dazu ausgelegt ist, die erfassten Ampelinformationen zu verarbeiten, um zu bestimmen, ob sich eine Zielampel am Ende einer Rotphase befindet, sowie die erfassten Fahrerstatusinformationen zu verarbeiten, um zu bestimmen, ob ein Aufmerksamkeitsgrad des Fahrers hoch genug zum Fahren ist, wobei die Zielampel eine nächste Ampel in Fahrtrichtung des Fahrzeugs nach Passieren einer aktuellen Ampel ist und das Ende einer Rotphase vorliegt, wenn eine verbleibende Zeit der Rotphase unter einem vorbestimmten Zeitschwellenwert liegt;
ein Bestimmungsmodul (14), das dazu ausgelegt ist, auf Grundlage der erfassten Ampelinformationen, der Fahrerstatusinformationen sowie einiger oder aller der Folgenden zu bestimmen, ob ein Warnbefehl erzeugt werden soll: Informationen zu Standort, Status und Navigation des Fahrzeugs, Karteninformationen, Statusinformationen des vorausfahrenden Fahrzeugs und Umgebungsinformationen, wobei das Bestimmen Bestimmen umfasst, einen Warnbefehl zu erzeugen, wenn die folgende Bedingung erfüllt ist: die Zielampel befindet sich am Ende einer Rotphase, und der Aufmerksamkeitsgrad des Fahrers ist nicht hoch genug zum Fahren; und
ein Ausgabemodul (15), das dazu ausgelegt ist, den Warnbefehl an eine Mensch-Maschine-Schnittstelle (HMI) des Fahrzeugs auszugeben, um eine Fahrzeugstartwarnung im Fahrzeug auszulösen.

2. Fahrzeugstart-Warnvorrichtung (10) nach Anspruch 1, wobei das Bestimmungsmodul ferner dazu ausgelegt ist, einen Auslösezeitpunkt, zu dem die Fahrzeugstart-Warnung ausgelöst wird, auf Grundlage des Aufmerksamkeitsgrads des Fahrers so zu bestimmen, dass die Fahrzeugstartwarnung durch die HMI mit sinkendem Aufmerksamkeitsgrad des Fahrers früher ausgelöst wird.

3. Fahrzeugstart-Warnvorrichtung (10) nach Anspruch 1 oder 2, wobei das Bestimmungsmodul ferner dazu ausgelegt ist, einen Auslösemodus, mit dem die Fahrzeugstartwarnung ausgelöst wird, auf Grundlage des Aufmerksamkeitsgrads des Fahrers so zu bestimmen, dass mit sinkendem Aufmerksamkeitsgrad des Fahrers der Auslösegrad der Fahrzeugstartwarnung erhöht und/oder die Auslösehäufigkeit der Fahrzeugstartwarnung gesteigert wird.

4. Fahrzeugstart-Warnvorrichtung (10) nach einem der Ansprüche 1 bis 3, wobei die Warnvorrichtung ferner ein Vorbestimmungsmodul (12) umfasst;
wobei das Vorbestimmungsmodul (10) dazu ausgelegt ist, auf Grundlage der erfassten Informationen zu bestimmen, ob sich das Fahrzeug in einem Rotphasen-Wartezustand befindet, die nachfolgenden Bestimmungs- und Verarbeitungsvorgänge der Fahrzeugstart-Warnvorrichtung zu aktivieren, wenn bestimmt wird, dass sich das Fahrzeug im Rotphasen-Wartezustand befindet, und eine nachfolgende Verarbeitung der Fahrzeugstart-Warnvorrichtung nicht zu aktivieren, wenn bestimmt wird, dass sich das Fahrzeug nicht im Rotphasen-Wartezustand befindet; und
das Vorbestimmungsmodul dazu ausgelegt ist, zu bestimmen, dass sich das Fahrzeug im Rotphasen-Wartezustand befindet, wenn die folgenden Bedingungen erfüllt sind: (1) das Zielampelsignal befindet sich in einer Rotphase; und (2) das Fahrzeug weist über einen vorbestimmten Zeitraum hinweg eine aktuelle Geschwindigkeit von Null auf.

5. Fahrzeugstart-Warnvorrichtung nach einem der Ansprüche 1 bis 4, wobei das Verarbeitungsmodul ferner dazu ausgelegt ist, einen Abstand des Fahrzeugs von einer Haltelinie zu berechnen, bevor bestimmt wird, ob der Aufmerksamkeitsgrad des Fahrers hoch genug zum Fahren ist, wenn es sich bei dem Fahrzeug nicht um ein führendes Fahrzeug handelt, den Aufmerksamkeitsgrad des Fahrers weiter zu bestimmen, wenn der Abstand kleiner als ein Abstandsschwellenwert ist; und nachfolgende Verarbeitungsvorgänge der Fahrzeugstart-Warnvorrichtung zu beenden, wenn der Abstand größer oder gleich dem Abstandsschwellenwert ist.

6. Fahrzeugstart-Warnvorrichtung nach einem der Ansprüche 1 bis 5, wobei das Verarbeitungsmodul ferner dazu ausgelegt ist, eine durch ein Starten des vorausfahrenden Fahrzeugs bedingte Wartezeit des Fahrzeugs zu berechnen, bevor bestimmt wird, ob der Aufmerksamkeitsgrad des Fahrers hoch genug zum Fahren ist, den Aufmerksamkeitsgrad des Fahrers weiter zu bestimmen, wenn die Wartezeit unter einem Zeitschwellenwert liegt, und die nachfolgenden Verarbeitungsvorgänge der Fahrzeugstart-Warnvorrichtung zu beenden, wenn die Wartezeit größer oder gleich dem Zeitschwellenwert ist, und
wobei der Zeitschwellenwert auf Grundlage einer Summe aus einer verbleibenden Zeit der aktuellen Rotphase und eines Zeitraums einer nachfolgenden Grünphase bestimmt wird.

7. Fahrzeugstart-Warnvorrichtung (10) nach einem der Ansprüche 1 bis 6, wobei das Verarbeitungsmodul dazu ausgelegt ist, eine Wartereihenzeit T_wart des Fahrzeugs aufgrund eines Startens des vorausfahrenden Fahrzeugs vor dem Bestimmen, ob der Aufmerksamkeitsgrad des Fahrers hoch genug zum Fahren ist, auf Grundlage der folgenden Formel zu berechnen:$T_wart = ΣΑ \left(i\right) * t \left(i\right) * L / ΣΑ \left(i\right) * 1 \left(i\right) + L / S ,$
wobei "i" für einen Fahrzeugtyp des vorausfahrenden Fahrzeugs steht, "A(i)" ein Verhältnis der Anzahl der Fahrzeuge vom Typ i zu einer Gesamtzahl vorausfahrender Fahrzeuge ist, "t(i)" eine Startzeit des Fahrzeugs des Typs i ist, "l(i)" eine Länge des Fahrzeugs des Typs i ist, "L" ein Abstand des Fahrzeugs von einer Haltelinie ist und "S" eine Geschwindigkeitsbegrenzung der aktuellen Fahrspur ist,
wobei das Verarbeitungsmodul dazu ausgelegt ist, den Aufmerksamkeitsgrad des Fahrers weiter zu bestimmen, wenn die Wartereihenzeit T_wart unter einem Zeitschwellenwert liegt, und die nachfolgenden Verarbeitungsvorgänge der Fahrzeugstart-Warnvorrichtung zu beenden, wenn die Wartereihenzeit größer oder gleich dem Zeitschwellenwert ist, und
wobei der Zeitschwellenwert auf Grundlage einer Summe aus einer verbleibenden Zeit der aktuellen Rotphase und eines Zeitraums einer nachfolgenden Grünphase bestimmt wird.

8. Fahrzeugstart-Warnvorrichtung (10) nach einem der Ansprüche 1 bis 7, wobei das Verarbeitungsmodul dazu ausgelegt ist, auf Grundlage der Fahrerstatusinformationen ein Aufmerksamkeitsniveau des Aufmerksamkeitsgrads des Fahrers zu berechnen und auf Grundlage des Aufmerksamkeitsniveaus zu bestimmen, ob der Aufmerksamkeitsgrad des Fahrers hoch genug zum Fahren ist, und
wobei das Verarbeitungsmodul dazu ausgelegt ist, die Fahrerstatusinformationen in ein im Verarbeitungsmodul gespeichertes Maschinenlernmodell einzugeben, und das Aufmerksamkeitsniveau vom Maschinenlernmodell ausgegeben wird.

9. Fahrzeugstart-Warnvorrichtung (10) nach einem der Ansprüche 1 bis 8, wobei das Verarbeitungsmodul dazu ausgelegt ist, zu bestimmen, dass der Aufmerksamkeitsgrad des Fahrers nicht hoch genug zum Fahren ist, wenn eine verbleibende Zeit der aktuellen Rotphase null beträgt und eine Zeitdauer, während der der Fahrer unkonzentriert ist, einen Unaufmerksamkeits-Zeitschwellenwert überschreitet.

10. Fahrzeugstart-Warnvorrichtung (10) nach Anspruch 4, wobei das Erfassungsmodul ferner dazu ausgelegt ist, Navigationsinformationen, Standortinformationen, Karteninformationen und Umgebungsinformationen zu erfassen, und das Vorbestimmungsmodul ferner dazu ausgelegt ist, eine Zielfahrtrichtung des Fahrzeugs nach Passieren der aktuellen Ampel auf Grundlage von (1) Navigationsinformationen und/oder (2) Standortinformationen, Karteninformationen und Umgebungsinformationen zu bestimmen sowie die Zielampel auf Grundlage der Zielfahrtrichtung und der Ampelinformationen zu bestimmen.

11. Fahrzeugstart-Warnvorrichtung (10) nach einem der Ansprüche 1 bis 10, wobei die Ampelinformationen eine aktuelle Ampelphase und eine verbleibende Zeit der aktuellen Ampelphase umfassen und die Ampelinformationen ferner Zeiträume anderer Ampelphasen umfassen.

12. Fahrzeugstart-Warnvorrichtung (10) nach einem der Ansprüche 1 bis 11, wobei die Fahrerstatusinformationen eines oder mehrere der Folgenden umfassen: eine Blickrichtung, eine Kopfausrichtung, eine Blinzelfrequenz, eine Größe und eine Ausrichtung einer Pupille sowie eine Mimik des Fahrers.

13. Fahrzeug, umfassend:
eine Fahrzeugstart-Warnvorrichtung (10) nach einem der vorhergehenden Ansprüche 1 bis 12 und
eine Mensch-Maschine-Schnittstelle (HMI) (20), die mit der Fahrzeugstart-Warnvorrichtung (10) in Kommunikation steht; wobei die HMI (20) dazu ausgelegt ist, auf Grundlage des Warnbefehls eine Fahrzeugstartwarnung bereitstellen, um eine Fahrzeugstartwarnung im Fahrzeug durchzuführen.

14. Fahrzeugstart-Warnverfahren, umfassend:
Erfassen von Ampelinformationen und Fahrerstatusinformationen sowie Erfassen einiger oder aller der Folgenden: Informationen zu Standort, Status und Navigation eines Fahrzeugs, Karteninformationen, Statusinformationen eines vorausfahrenden Fahrzeugs und Umgebungsinformationen;
Verarbeiten der erfassten Ampelinformationen, um zu bestimmen, ob sich eine Zielampel am Ende einer Rotphase befindet, sowie der erfassten Fahrerstatusinformationen, um zu bestimmen, ob der Aufmerksamkeitsgrad des Fahrers hoch genug zum Fahren ist, wobei die Zielampel eine nächste Ampel in Fahrtrichtung des Fahrzeugs nach Passieren einer aktuellen Ampel ist und das Ende einer Rotphase vorliegt, wenn eine verbleibende Zeit der Rotphase unter einem vorbestimmten Zeitschwellenwert liegt;
Bestimmen, ob ein Warnbefehl erzeugt werden soll, auf Grundlage der erfassten Ampelinformationen, der Fahrerstatusinformationen und einiger oder aller der Folgenden: Informationen zu Standort, Status und Navigation des Fahrzeugs, Karteninformationen, Statusinformationen des vorausfahrenden Fahrzeugs sowie Umgebungsinformationen, wobei das Bestimmen Bestimmen umfasst, einen Warnbefehl zu erzeugen, wenn die folgende Bedingung erfüllt ist: die Zielampel befindet sich am Ende einer Rotphase und der Aufmerksamkeitsgrad des Fahrers ist nicht hoch genug zum Fahren; und
Ausgeben des Warnbefehls an eine Mensch-Maschine-Schnittstelle (HMI) des Fahrzeugs, um eine Fahrzeugstartwarnung im Fahrzeug auszulösen.

15. Nichtflüchtiges, computerlesbares Medium, das Fahrzeugstart-Warnungsanweisungen umfasst, die in einem Speicher gespeichert sind und von einem Prozessor ausgeführt werden, um Schritte durchzuführen, die Folgendes umfassen:
Erfassen von Ampelinformationen und Fahrerstatusinformationen sowie Erfassen einiger oder aller der Folgenden: Informationen zu Standort, Status und Navigation eines Fahrzeugs, Karteninformationen, Statusinformationen eines vorausfahrenden Fahrzeugs und Umgebungsinformationen;
Verarbeiten der erfassten Ampelinformationen, um zu bestimmen, ob sich eine Zielampel am Ende einer Rotphase befindet, sowie der erfassten Fahrerstatusinformationen, um zu bestimmen, ob der Aufmerksamkeitsgrad des Fahrers hoch genug zum Fahren ist, wobei die Zielampel eine nächste Ampel in Fahrtrichtung des Fahrzeugs nach Passieren einer aktuellen Ampel ist und das Ende einer Rotphase vorliegt, wenn eine verbleibende Zeit der Rotphase unter einem vorbestimmten Zeitschwellenwert liegt;
Bestimmen, ob ein Warnbefehl erzeugt werden soll, auf Grundlage der erfassten Ampelinformationen, der Fahrerstatusinformationen und einiger oder aller der Folgenden: Informationen zu Standort, Status und Navigation des Fahrzeugs, Karteninformationen, Statusinformationen des vorausfahrenden Fahrzeugs sowie Umgebungsinformationen, wobei das Bestimmen Bestimmen umfasst, einen Warnbefehl zu erzeugen, wenn die folgende Bedingung erfüllt ist: die Zielampel befindet sich am Ende einer Rotphase und der Aufmerksamkeitsgrad des Fahrers ist nicht hoch genug zum Fahren; und
Ausgeben des Warnbefehls an eine Mensch-Maschine-Schnittstelle (HMI) des Fahrzeugs, um eine Fahrzeugstartwarnung im Fahrzeug auszulösen.

## Revendications

1. Dispositif (10) d'avertissement de démarrage d'un véhicule comprenant :
un module (11) d'acquisition configuré pour acquérir des informations de feu de signalisation et des informations d'état du conducteur et pour acquérir une partie ou l'ensemble des éléments suivants : des informations sur l'emplacement, l'état et la navigation d'un véhicule, des informations cartographiques, des informations d'état d'un véhicule précédent, et des informations environnementales ;
un module (13) de traitement configuré pour traiter les informations de feu de signalisation acquises afin de déterminer si un feu de signalisation cible se trouve à la fin d'un signal lumineux rouge et les informations d'état du conducteur acquises afin de déterminer si le degré d'attention du conducteur est assez élevé pour conduire, le feu de signalisation cible étant un feu de signalisation suivant dans le sens de circulation du véhicule après avoir franchi un feu de signalisation actuel, la fin d'un signal lumineux rouge étant le moment où un temps restant du signal lumineux rouge est inférieur à un seuil de temps prédéterminé ;
un module (14) de détermination configuré pour déterminer s'il faut générer une commande d'avertissement sur la base des informations de feu de signalisation acquises, des informations d'état de conducteur et d'une partie ou de la totalité des éléments suivants : les informations sur l'emplacement, l'état et la navigation du véhicule, les informations cartographiques, les informations d'état du véhicule précédent, et les informations environnementales, la détermination comprenant une détermination selon laquelle il faut générer une commande d'avertissement si la condition suivante est satisfaite : le feu de signalisation cible se trouve à la fin d'un signal lumineux rouge et le degré d'attention du conducteur n'est pas assez élevé pour conduire ; et
un module (15) de sortie configuré pour délivrer la commande d'avertissement à une interface homme-machine, IHM, du véhicule afin de déclencher un avertissement de démarrage du véhicule dans le véhicule.

2. Dispositif (10) d'avertissement de démarrage de véhicule selon la revendication 1, le module de détermination étant en outre configuré pour déterminer un moment de déclenchement auquel l'avertissement de démarrage de véhicule est déclenché sur la base du degré d'attention du conducteur de telle sorte que l'avertissement de démarrage de véhicule soit déclenché plus tôt par l'IHM lorsque le degré d'attention du conducteur baisse.

3. Dispositif (10) d'avertissement de démarrage de véhicule selon la revendication 1 ou 2, le module de détermination étant en outre configuré pour déterminer un mode de déclenchement avec lequel l'avertissement de démarrage de véhicule est déclenché sur la base du degré d'attention du conducteur de telle sorte qu'un degré de déclenchement de l'avertissement de démarrage de véhicule soit augmenté et/ou qu'une fréquence de déclenchement de l'avertissement de démarrage de véhicule soit augmentée lorsque le degré d'attention du conducteur baisse.

4. Dispositif (10) d'avertissement de démarrage de véhicule selon l'une quelconque des revendications 1 à 3, le dispositif d'avertissement comprenant en outre un module (12) de prédétermination ;
le module (10) de prédétermination étant configuré pour déterminer si le véhicule est dans un état d'attente de feu rouge sur la base des informations acquises, pour activer les opérations subséquentes de détermination et de traitement du dispositif d'avertissement de démarrage de véhicule s'il est déterminé que le véhicule est dans l'état d'attente de feu rouge, et pour ne pas activer un traitement ultérieur du dispositif d'avertissement de démarrage du véhicule s'il est déterminé que le véhicule n'est pas dans l'état d'attente de feu rouge ; et
le module de prédétermination étant configuré pour déterminer que le véhicule est en état d'attente de feu rouge si les conditions suivantes sont remplies : (1) le signal de feu de signalisation cible est dans une phase de feu rouge ; et (2) le véhicule a une vitesse actuelle de zéro avec une durée supérieure à une période prédéterminée.

5. Dispositif d'avertissement de démarrage de véhicule selon l'une quelconque des revendications 1 à 4, le module de traitement étant en outre configuré pour calculer une distance du véhicule par rapport à une ligne d'arrêt avant de déterminer si le degré d'attention du conducteur est assez élevé pour conduire dans le cas où le véhicule n'est pas un véhicule de tête, pour continuer à déterminer le degré d'attention du conducteur si la distance est inférieure à un seuil de distance ; et pour mettre fin aux opérations subséquentes de traitement du dispositif d'avertissement de démarrage du véhicule si la distance est supérieure ou égale au seuil de distance.

6. Dispositif d'avertissement de démarrage de véhicule selon l'une quelconque des revendications 1 à 5, le module de traitement étant en outre configuré pour calculer un temps d'attente du véhicule dû au démarrage du véhicule précédent avant de déterminer si le degré d'attention du conducteur est assez élevé pour conduire, pour continuer à déterminer le degré d'attention du conducteur si le temps d'attente est inférieur à un seuil de temps, et pour mettre fin aux opérations subséquentes de traitement du dispositif d'avertissement de démarrage du véhicule si le temps d'attente est supérieur ou égal au seuil de temps, et
le seuil de temps étant déterminé à partir d'une somme d'un temps restant de la phase de feu rouge courante et d'une période d'une phase de feu vert suivante.

7. Dispositif (10) d'avertissement de démarrage de véhicule selon l'une quelconque des revendications 1 à 6, le module de traitement étant configuré pour calculer un temps de file d'attente T_queue du véhicule dû au démarrage du véhicule précédent avant de déterminer si le degré d'attention du conducteur est assez élevé pour conduire sur la base de la formule suivante :$T_queue = ΣΑ \left(i\right) * t \left(i\right) * L / ΣΑ \left(i\right) * l \left(i\right) + L / S ,$
où "i" est représentatif d'un type de véhicule du véhicule précédent, "A(i)" est un rapport entre le nombre de véhicules du type i et le nombre total de véhicules précédents, "t(i)" est un temps de démarrage du véhicule du type i, "l(i)" est une longueur du véhicule du type i, "L" est une distance du véhicule par rapport à une ligne d'arrêt, et "S" est une limite de vitesse d'une voie courante,
le module de traitement étant configuré pour continuer à déterminer le degré d'attention du conducteur si le temps de file d'attente T_queue est inférieur à un seuil de temps et pour mettre fin aux opérations subséquentes de traitement du dispositif d'avertissement de démarrage du véhicule si le temps de file d'attente est supérieur ou égal au seuil de temps, et
le seuil de temps étant déterminé à partir d'une somme d'un temps restant de la phase de feu rouge courante et d'une période d'une phase de feu vert suivante.

8. Dispositif (10) d'avertissement de démarrage de véhicule selon l'une quelconque des revendications 1 à 7, le module de traitement étant configuré pour calculer un niveau d'attention du degré d'attention du conducteur sur la base des informations d'état du conducteur, et pour déterminer si le degré d'attention du conducteur est assez élevé pour conduire sur la base du niveau d'attention, et
le module de traitement étant configuré pour introduire les informations d'état du conducteur dans un modèle d'apprentissage automatique stocké dans le module de traitement et le niveau d'attention étant délivré à partir du modèle d'apprentissage automatique.

9. Dispositif (10) d'avertissement de démarrage de véhicule selon l'une quelconque des revendications 1 à 8, le module de traitement étant configuré pour déterminer que le degré d'attention du conducteur n'est pas assez élevé pour conduire si un temps restant de la phase de feu rouge actuelle est nul et qu'une durée pendant laquelle le conducteur n'est pas concentré dépasse un seuil de période d'inattention.

10. Dispositif (10) d'avertissement de démarrage de véhicule selon la revendication 4, le module d'acquisition étant en outre configuré pour acquérir des informations de navigation, des informations de localisation, des informations cartographiques et des informations environnementales, et le module de prédétermination étant en outre configuré pour déterminer une direction de déplacement cible du véhicule après avoir traversé le feu de signalisation actuel sur la base (1) des informations de navigation et/ou (2) des informations de localisation, des informations cartographiques et des informations environnementales, et pour déterminer le feu de signalisation cible sur la base de la direction de déplacement cible et des informations de feux de signalisation.

11. Dispositif (10) d'avertissement de démarrage de véhicule selon l'une quelconque des revendications 1 à 10, les informations de feux de signalisation comprenant une couleur de feu actuelle et un temps restant de la phase de feu actuelle et les informations de feux de signalisation comprenant en outre des périodes de temps d'autres phases de feu.

12. Dispositif (10) d'avertissement de démarrage de véhicule selon l'une quelconque des revendications 1 à 11, les informations d'état du conducteur comprenant un ou plusieurs des éléments suivants : une direction du regard, une direction de la tête, une fréquence de clignement, une taille et une orientation d'une pupille et des expressions faciales du conducteur.

13. Véhicule, comprenant :
un dispositif (10) d'avertissement de démarrage de véhicule selon l'une quelconque des revendications précédentes 1 à 12, et
une interface homme-machine, IHM (20) en communication avec le dispositif (10) d'avertissement de démarrage de véhicule ; l'IHM (20) étant configurée pour fournir un avertissement de démarrage de véhicule pour avertir du démarrage du véhicule dans le véhicule sur la base de la commande d'avertissement.

14. Procédé d'avertissement de démarrage d'un véhicule, comprenant :
l'acquisition d'informations de feux de circulation et d'informations d'état du conducteur et l'acquisition de tout ou partie des informations suivantes : informations sur l'emplacement, l'état et la navigation d'un véhicule, informations cartographiques, informations d'état d'un véhicule précédent et informations environnementales ;
le traitement des informations de feu de signalisation acquises pour déterminer si un feu de signalisation cible se trouve à la fin d'un signal lumineux rouge et les informations d'état du conducteur acquises pour déterminer si le degré d'attention du conducteur est assez élevé pour conduire, le feu de signalisation cible étant un feu de signalisation suivant dans le sens de la marche du véhicule après avoir franchi un feu de signalisation actuel, la fin d'un signal lumineux rouge étant le moment où un temps restant du signal lumineux rouge est inférieur à un seuil de durée prédéterminé ;
le fait de déterminer s'il faut générer une commande d'avertissement sur la base des informations de feu de signalisation acquises, des informations d'état du conducteur et de tout ou partie des informations suivantes : des informations sur l'emplacement, l'état et la navigation du véhicule, des informations cartographiques, des informations d'état du véhicule précédent, et des informations environnementales, la détermination comprenant une détermination selon laquelle il faut générer une commande d'avertissement si la condition suivante est satisfaite : le feu de signalisation cible se trouve à la fin d'un signal lumineux rouge et le degré d'attention du conducteur n'est pas assez élevé pour conduire ; et
le fait de délivrer la commande d'avertissement à une interface homme-machine, IHM, du véhicule pour déclencher un avertissement de démarrage du véhicule dans le véhicule.

15. Support non transitoire lisible par ordinateur comprenant des instructions d'avertissement de démarrage de véhicule stockées dans une mémoire et exécutées par un processeur pour réaliser les étapes comprenant :
l'acquisition d'informations de feux de circulation et d'informations d'état du conducteur et l'acquisition de tout ou partie des informations suivantes : informations sur l'emplacement, l'état et la navigation d'un véhicule, informations cartographiques, informations d'état d'un véhicule précédent et informations environnementales ;
le traitement des informations de feu de signalisation acquises pour déterminer si un feu de signalisation cible se trouve à la fin d'un signal lumineux rouge et les informations d'état du conducteur acquises pour déterminer si le degré d'attention du conducteur est assez élevé pour conduire, le feu de signalisation cible étant un feu de signalisation suivant dans le sens de la marche du véhicule après avoir franchi un feu de signalisation actuel, la fin d'un signal lumineux rouge étant le moment où un temps restant du signal lumineux rouge est inférieur à un seuil de durée prédéterminé ;
le fait de déterminer s'il faut générer une commande d'avertissement sur la base des informations de feu de signalisation acquises, des informations d'état du conducteur et de tout ou partie des informations suivantes : des informations sur l'emplacement, l'état et la navigation du véhicule, des informations cartographiques, des informations d'état du véhicule précédent, et des informations environnementales, la détermination comprenant une détermination selon laquelle il faut générer une commande d'avertissement si la condition suivante est satisfaite : le feu de signalisation cible se trouve à la fin d'un signal lumineux rouge et le degré d'attention du conducteur n'est pas assez élevé pour conduire ; et
le fait de délivrer la commande d'avertissement à une interface homme-machine, IHM, du véhicule pour déclencher un avertissement de démarrage du véhicule dans le véhicule.
